# EUROPEAN PATENT APPLICATION

(11) **EP 4 195 392 A1**
(43) Date of publication of application: **14.06.2023**
(21) Application number: 21853588.8
(22) Date of filing: 16.07.2021
(51) Int. Cl.: H01M 50/342, H01M 6/16, H01M 50/183, H01M 50/528

(54) **HERMETICALLY SEALED BATTERY**

(30) Priority: 06.08.2020 JP 2020133514
(71) Applicant: PANASONIC INTELLECTUAL PROPERTY MANAGEMENT CO., LTD., Chuo-ku Osaka-shi Osaka 540-6207 (JP)
(72) Inventor: ASANO, Yuya, Chuo-ku, Osaka-shi, Osaka 540-6207 (JP); TAHARA, Shinichiro, Chuo-ku, Osaka-shi, Osaka 540-6207 (JP); KATO, Fumio, Chuo-ku, Osaka-shi, Osaka 540-6207 (JP)
(74) Representative: Novagraaf International SA
(86) International application number: PCT/JP2021/026854
(87) International publication number: WO 2022/030231

(57) **Abstract**

A sealed battery includes a battery case with a bottomed cylindrical shape having an opening; an electrode body housed in the battery case; an electrolyte solution; and a sealing member that closes the opening of the battery case. The sealing member is formed by stacking a terminal cap, a bottom plate electrically connecting the terminal cap and an electrode of one polarity of the electrode body, and a valve body interposed between the terminal cap and the bottom plate. The valve body has a surface covered with a resin material, and an end surface that is an outer edge of the valve body is covered with a protective layer containing a compound A having corrosion resistance to the electrolyte solution.

## Description

### TECHNICAL FIELD

The present invention relates to a sealed battery including a battery case, an electrode body housed in the battery case, and a sealing member that closes an opening of the battery case.

### BACKGROUND ART

As a sealing method in a sealed battery, there is a method using a sealing member in which a valve body is fixed to a bottom plate and integrated. For example, in PTL 1, the assembly sealing plate includes a terminal cap, a valve body, a valve body support plate, and a hat-shaped bottom plate electrically connecting the terminal cap and an electrode of one polarity of a power generating element. The valve body and the valve body support plate are stacked on a flange portion of the bottom plate and the flange portion is folded back, so that the bottom plate, the valve body, and the valve body support plate are integrated. Each of the terminal cap and the bottom plate is provided with a through hole for discharging gas.

### Citation List

### Patent Literature

PTL 1: Unexamined Japanese Patent Publication No. 2005-347098

### SUMMARY OF THE INVENTION

In manufacture of a sealed battery, when a battery case is sealed, an electrolyte solution may overflow and scatter from the battery case. The scattered electrolyte solution may enter a sealing member through a hole provided in a cap and adhere to a valve body in the sealing process or after sealing. The electrolyte solution adhering to the valve body corrodes the valve body, which may cause a decrease in valve operating pressure and a decrease in sealability.

One aspect of the present invention relates to a sealed battery including a battery case with a bottomed cylindrical shape having an opening; an electrode body housed in the battery case; an electrolyte solution; a sealing member that closes the opening of the battery can, wherein the sealing member is formed by stacking a terminal cap; a bottom plate electrically connecting the terminal cap and an electrode of one polarity of the electrode body; and a valve body interposed between the terminal cap and the bottom plate, and the valve body has a surface covered with a resin material, and a first end surface that is an outer edge of the valve body is covered with a protective layer containing a compound A having corrosion resistance to the electrolyte solution.

According to the present invention, it is possible to provide a sealed battery that has a desired valve operating pressure and maintains high sealability in a range in which the battery internal pressure is less than the desired valve operating pressure.

### BRIEF DESCRIPTION OF THE DRAWINGS

Fig. 1 is a schematic cross-sectional view of a sealed battery according to an exemplary embodiment of the present invention.
Fig. 2 is a cross-sectional view showing a main part of a structure of a sealing portion used in a sealed battery.
Fig. 3A is a cross-sectional view showing an example of a structure of a sealing member used in a sealed battery according to an exemplary embodiment of the present invention.
Fig. 3B is a cross-sectional view showing an example of a structure of a sealing member used in the sealed battery according to the exemplary embodiment of the present invention.
Fig. 3C is a cross-sectional view showing an example of a structure of a sealing member used in the sealed battery according to the exemplary embodiment of the present invention.
Fig. 4A is a cross-sectional view for explaining a method for manufacturing a structure of a sealing member used in the sealed battery according to the exemplary embodiment of the present invention.
Fig. 4B is a cross-sectional view for explaining the method for manufacturing a structure of a sealing member used in the sealed battery according to the exemplary embodiment of the present invention.
Fig. 4C is a cross-sectional view for explaining the method for manufacturing a structure of a sealing member used in the sealed battery according to the exemplary embodiment of the present invention.
Fig. 4D is a cross-sectional view for explaining the method for manufacturing a structure of a sealing member used in the sealed battery according to the exemplary embodiment of the present invention.

### DESCRIPTION OF EMBODIMENT

A sealed battery (hereinafter, it may be simply referred to as a battery) according to the present exemplary embodiment includes a battery case with a bottomed cylindrical shape having an opening, an electrode body housed in the battery case, an electrolyte solution, and a sealing member that closes the opening of the battery case. The sealing member is formed by stacking a terminal cap, a bottom plate electrically connecting the terminal cap and an electrode of one polarity of the electrode body, and a valve body interposed between the terminal cap and the bottom plate. The electrode body is formed by, for example, spirally winding a negative electrode, a separator, and a positive electrode.

The valve body is, for example, a metal sheet, and both surfaces of the valve body are covered with a resin material. This makes it possible to suppress corrosion of the valve body even when the electrolyte solution adheres to the surface of the valve body in the manufacturing process of the battery.

However, the surface of the valve body can be protected from corrosion by being covered with a resin film or the like in advance, but usually, since the metal layer is exposed on the end surface of the valve body, the corrosion of the valve body can proceed by the electrolyte solution coming into contact with the end surface. As a result, the valve body is easily peeled off from the bottom plate, sealability of the battery is lowered, and valve operating pressure may be lowered.

In the battery of the present exemplary embodiment, a first end surface that is an outer edge of the valve body is covered with a protective layer having corrosion resistance to the electrolyte solution. The protective layer contains a compound A having corrosion resistance to the electrolyte solution. As a result, corrosion of the valve body through the first end surface can also be suppressed, peeling of the valve body from the bottom plate due to corrosion is suppressed, and a decrease in the valve operating pressure is suppressed.

Preferably, the bottom plate has a folded portion bent in the inner peripheral direction so as to sandwich between the valve body and another portion of the bottom plate at an outer peripheral edge portion thereof, the outer peripheral edge portion of the valve body is caulked by the folded portion, and the valve body is fixed to the bottom plate. As a result, the valve body and the bottom plate can be handled as one component, and the battery can be easily assembled.

The valve body can be caulked and fixed to the bottom plate by the folded portion of the bottom plate. In this case, in the manufacturing process of the battery, the electrolyte solution can enter from a gap between the folded portion of the bottom plate and the valve body and come into contact with the first end surface. However, since contact of the electrolyte solution with the first end surface is restricted by the protective layer, the corrosion of the valve body through the first end surface is suppressed. Therefore, peeling of the valve body from the bottom plate due to corrosion is suppressed, and a decrease in the valve operating pressure is suppressed.

A spacer (valve body support plate) may be interposed between the valve body and the folded portion of the bottom plate. The spacer is a ring-shaped member, and has a role of restricting expansion of the valve body accompanying the increase in the internal pressure and limiting a region where the valve body expands to a central region of the ring where the spacer is not interposed. By adjusting the width of the ring, the operating pressure of the safety valve is adapted to a desired value. However, the electrolyte solution easily enters through a gap between the spacer and the folded portion of the bottom plate.

However, by forming the protective layer so as to be interposed also in a space between a second end surface that is an outer edge of the spacer and the bottom plate, the contact of the electrolyte solution with the first end surface is restricted. As a result, corrosion of the valve body through the first end surface can be further suppressed, and peeling of the valve body from the bottom plate can be effectively suppressed. As a result, a decrease in the valve operating pressure can be effectively suppressed.

The protective layer may be attached to a surface of the spacer, the surface not facing the valve body. The attached protective layer comes into contact with the folded portion of the bottom plate, and the gap between the folded portion and the spacer is closed. As a result, corrosion of the valve body through the first end surface can be further suppressed, and peeling of the valve body from the bottom plate can be effectively suppressed. As a result, a decrease in the valve operating pressure can be effectively suppressed.

As the amount of the electrolyte solution is increased, the electrolyte solution easily scatters in the manufacturing process, and the scattered electrolyte solution easily reaches the valve body. In addition, the larger the electrode body, the larger the amount of the electrolyte solution retained above the electrode body (on the sealing member side), so that the electrolyte solution easily scatters in the manufacturing process, and the scattered electrolyte solution easily reaches the valve body. That is, the problem of scattering of the electrolyte solution and corrosion of the valve body due to the scattering of the electrolyte solution in the manufacturing process tends to be remarkable when a battery with a high energy density is to be realized.

However, the above-described problem is solved by the battery of the present exemplary embodiment, and a battery with a high energy density and a stable valve operating pressure can be realized.

Distance L between the bottom plate and the electrode body may be 2.3 mm or less. In the case of a normal cylindrical battery, shortest distance L between the bottom plate and the electrode body is a difference between a height of the lowest position (usually, a connection portion with a lead) on an inner surface of the bottom plate facing the electrode body and a height of the highest portion (the highest portion among the upper end portions of the positive electrode, the negative electrode, and the separator) of the electrode body when the battery is placed upright such that the sealing member is positioned on the top. The distance L tends to decrease as the size of the electrode body increases in order to achieve higher energy. On the other hand, since the distance between the electrode body and the sealing member becomes short, the electrolyte solution easily scatters in the manufacturing process, the scattered electrolyte solution reaches the valve body, and the valve body is easily corroded.

Further, as a configuration of the bottom plate, there is a configuration in which the bottom plate is bent such that a central region of the bottom plate protrudes toward the electrode body in order to facilitate connection with the lead. In this case, the distance L is a distance from the protruding central region to the highest portion of the electrode body. In this case, when the battery case is sealed, the protruding central region of the bottom plate collides with a liquid level of the electrolyte solution, the electrolyte solution easily overflows and scatters from the battery case, and the valve body is easily corroded by the scattered electrolyte solution.

However, according to the battery of the present exemplary embodiment, even when the distance L is set to 2.3 mm or less by covering the first end surface of the valve body with the protective layer having corrosion resistance, the corrosion of the valve body is suppressed, and a stable valve operating pressure can be obtained. The distance L ranges, for example, from 1.5 mm to 2.3 mm inclusive, and preferably from 2.0 mm to 2.3 mm inclusive.

When the inner diameter of a hollow portion of the electrode body is defined as d and the inner diameter of the battery can is defined as D, d/D ≤ 0.2 may be satisfied. In this case, the lengths of the positive electrode and the negative electrode in the winding direction of the electrode body are long, and a high energy density can be obtained. On the other hand, since a space in which the electrolyte solution retains is reduced in the hollow portion, the amount of the electrolyte solution retained in the space above the electrode body between the bottom plate and the electrode body increases, and the electrolyte solution easily scatters in the manufacturing process, and the scattered electrolyte solution reaches the valve body, and the valve body is easily corroded. However, according to the battery of the present exemplary embodiment, even when d/D ≤ 0.2 is satisfied by covering the first end surface of the valve body with the protective layer having corrosion resistance, the corrosion of the valve body is suppressed, and a stable valve operating pressure can be obtained. Inner diameter d of the hollow portion of the electrode body means a diameter of a circle having an area equal to the area (equivalent circle) of the hollow portion and is calculated based on a cross-sectional photograph of the electrode body. d/D ranges, for example, from 0.1 to 0.2 or less inclusive, and preferably from 0.15 to 0.2 or less inclusive.

The terminal cap is provided with a hole for discharging gas when the internal pressure of the battery increases and the safety valve operates. The total area of the holes may be 2 mm² or more. As the electrode body is increased in size and a high capacity is achieved, it is necessary to increase the area of the hole for gas discharge. On the other hand, as the area of the hole provided in the terminal cap is increased, the electrolyte solution scattered in the manufacturing process easily reaches the valve body through the hole, and the valve body is easily corroded. However, according to the battery of the present exemplary embodiment, even when the total area of the holes of the terminal cap is set to 2 mm² or more by covering the first end surface of the valve body with the protective layer having corrosion resistance, the corrosion of the valve body is suppressed, and a stable valve operating pressure can be obtained. The total area of the holes of the terminal cap ranges, for example, from 2 mm² to 4 mm² inclusive, and preferably from 2 mm² to 3 mm² inclusive.

Note that the area of the hole means a projected area on a projection surface having a maximum projected area when a contour line of an opening forming the hole is projected on an arbitrary plane. When the contour lines are on substantially the same plane, the area of the hole is an area of the contour line when the contour line is viewed from the normal direction of the plane formed by the contour line. When a plurality of holes (openings) are provided in the terminal cap, the area of each hole is derived according to the above, and a total value is obtained.

The thickness of the separator constituting the electrode body may be 0.02 mm or less. The thinner the thickness of the separator, the easier it is to achieve high energy density and high output. On the other hand, when the thickness of the separator is thin, the amount of the electrolyte solution that can be retained in the electrode body is small, and the amount of the electrolyte solution retained in the space above the electrode body between the bottom plate and the electrode body is large. As a result, the electrolyte solution easily scatters in the manufacturing process, the scattered electrolyte solution reaches the valve body, and the valve body is easily corroded. However, according to the battery of the present exemplary embodiment, even when the thickness of the separator is set to 0.02 mm or less by covering the first end surface of the valve body with the protective layer having corrosion resistance, the corrosion of the valve body is suppressed, and a stable valve operating pressure can be obtained. The thickness of the separator may range, for example, from 0.01 mm to 0.02 mm inclusive, and preferably from 0.015 mm to 0.02 mm inclusive.

The viscosity at 20°C of the electrolyte solution may be 0.0012 Pa ·s or less. The lower the viscosity of the electrolyte solution, the easier it is to increase the conductivity of ions contained in the electrolyte solution, and achieve high output. On the other hand, when the viscosity of the electrolyte solution is small, the concentration of ions contained in the electrolyte solution is generally low, and the amount of the electrolyte solution required increases as the energy increases. Furthermore, when the viscosity of the electrolyte solution is low, the electrolyte solution easily scatters in the manufacturing process. As a result, the scattered electrolyte solution reaches the valve body, and the valve body is easily corroded. However, according to the battery of the present exemplary embodiment, even when the viscosity at 20°C of the electrolyte solution is set to 0.0012 Pa - s or less by covering the first end surface of the valve body with the protective layer having corrosion resistance, the corrosion of the valve body is suppressed, and a stable valve operating pressure can be obtained. The viscosity at 20°C of the electrolyte solution ranges, for example, from 0.0005 Pa ·s to 0.0012 Pa ·s inclusive, and preferably from 0.001 Pa ·s to 0.0012 Pa ·s inclusive.

Weight of the positive electrode mixture per unit area of the positive electrode constituting the electrode body may be 0.14 g/cm² or more. As the weight of the positive electrode mixture per unit area is increased, a higher energy density can be achieved. On the other hand, as the weight of the positive electrode mixture per unit area is increased, the amount of the electrolyte solution that can be retained in the electrode body is decreased, and the amount of the electrolyte solution retained in the space above the electrode body between the bottom plate and the electrode body is increased. As a result, the electrolyte solution easily scatters in the manufacturing process, the scattered electrolyte solution reaches the valve body, and the valve body is easily corroded. However, according to the battery of the present exemplary embodiment, even when the weight of the positive electrode mixture per unit area of the positive electrode is set to 0.14 g/cm² or more by covering the first end surface of the valve body with the protective layer having corrosion resistance, the corrosion of the valve body is suppressed, and a stable valve operating pressure can be obtained. The weight of the positive electrode mixture per unit area ranges from 0.14 g/cm² to 0.19 g/cm² inclusive, and preferably from 0.14 g/cm² to 0.17 g/cm² inclusive.

The positive electrode includes, for example, a positive electrode current collector and a positive electrode mixture layer attached to the positive electrode current collector, as described later. The weight of the positive electrode mixture per unit area is determined by dividing weight of the positive electrode mixture layer (when the positive electrode mixture layer is formed on both surfaces, weight on both surfaces) by an area of one surface of the region where the positive electrode mixture layer is exposed in the positive electrode.

Also, the viscosity at 20°C of the electrolyte solution and the weight of the positive electrode mixture per unit area of the positive electrode are determined by decomposing an initial battery after manufacturing and taking out the electrolyte solution and the positive electrode. The viscosity at 20°C of the electrolyte solution and the weight of the positive electrode mixture per unit area of the positive electrode are values in a state where sufficient capacity (90% or more of design capacity) remains in the case of a primary battery, and values in a charged state where the SOC is 90% or more in the case of a secondary battery.

Hereinafter, a configuration of a sealed battery according to the present exemplary embodiment will be described with reference to the drawings. However, the present exemplary embodiment is not limited thereto. In the following illustrated examples, members having the same functions are denoted by the same reference numerals.

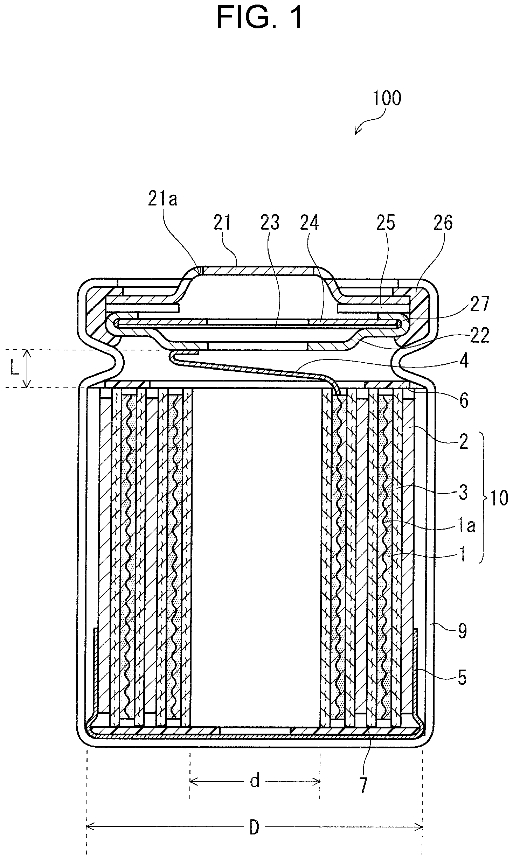

Fig. 1 is a schematic longitudinal cross-sectional view of an example of a sealed battery.

Battery 100 includes battery case with a bottomed cylindrical shape (battery can) 9, cylindrical electrode body 10 housed in the battery case 9 together with an electrolyte solution (not shown), and a sealing member, and an opening of the battery case 9 is closed by the sealing member. The sealing member includes terminal cap 21, bottom plate 22, and valve body 23. In the example of Fig. 1, the sealing member further includes spacer (valve body support plate) 24 and PTC element 25.

The electrode body 10 can be formed by winding positive electrode 1 and negative electrode 2 with separator 3 interposed therebetween. Positive-electrode lead 4 connected to current collector 1a of the positive electrode 1 is connected to the bottom plate 22. Negative-electrode lead 5 connected to the negative electrode 2 is connected to the case 9. In addition, upper insulating plate 6 and lower insulating plate 7 are disposed respectively in an upper part of and a lower part of the electrode body 10 to prevent an internal short circuit.

The bottom plate 22 is, for example, a ring-shaped member having an opening at the center, and is bent and folded back in the inner peripheral direction at the outer peripheral edge portion. The valve body 23 and the spacer 24 are sandwiched between another portion of the bottom plate 22 and a bent and extending folded portion the folded portion and the bottom plate, and the valve body 23 and the spacer 24 are fixed to the bottom plate 22. In other words, the valve body 23 is caulked to the bottom plate 22 via the spacer 24 and fixed to the bottom plate 22. The bottom plate 22 is electrically connected to one electrode (positive electrode 1) of the electrode body via the positive-electrode lead 4, and is electrically connected to the terminal cap 21 via the folded portion and the PTC element 25.

The valve body 23 is, for example, a disk-shaped plate member having no opening. When an internal pressure of the battery 100 increases, pressure is applied to a portion of the valve body 23 not covered with the spacer 24 in a direction of swelling outward. When the internal pressure exceeds a desired valve operating pressure, at least a partial region of the valve body 23 is broken by tensile stress. Gas in the battery 100 is discharged to the outside through the broken portion of the valve body 23 and hole 21a of the terminal cap. As a result, explosion prevention function operates and the internal pressure is released.

The PTC (positive temperature coefficient) element 25 is a ring-shaped member and includes a material whose electrical resistance increases with temperature rise. When an abnormally large current flows through the battery 100, temperature in the PTC element 25 rises due to heat generation. The electrical resistance of the PTC element 25 increases along with this, thereby reducing a current flowing through the battery 100.

The terminal cap 21, the PTC element 25, and the bottom plate 22 to which the valve body 23 and the spacer 24 are fixed are stacked and caulked to the battery case 9 via gasket 26, whereby the opening of the battery case 9 is sealed.

A material of battery case 9 is not particularly limited. Iron, an iron alloy (including stainless steel), aluminum, and an aluminum alloy (an alloy containing trace amounts of other metals such as manganese, copper and the like) can be exemplified.

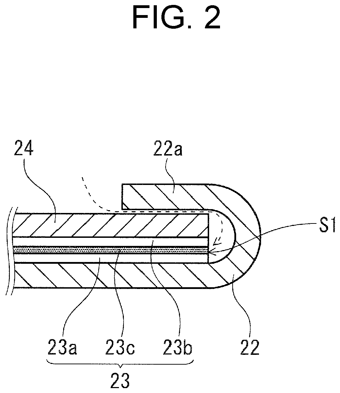

Fig. 2 is a view showing a structure of the valve body 23, the spacer 24 and the bottom plate 22 in the sealed battery, and is a view for explaining a problem that occurs when the protective layer is not provided. In Fig. 2, in particular, an outer peripheral edge portion of the bottom plate 22 is shown in an enlarged manner.

As described above, the valve body 23 is caulked to the bottom plate 22 via the spacer 24. In the example of Fig. 2, the valve body 23 is an aluminum foil, a surface facing the bottom plate 22 is covered with first resin layer 23a, and a surface facing the spacer 24 is covered with second resin layer 23b. The first resin layer 23a and the second resin layer 23b contain, for example, a compound having excellent corrosion resistance to an electrolyte solution such as polyethylene or polypropylene. The first resin layer 23a can be fixed to the bottom plate 22 by thermal welding.

When the electrolyte solution overflows and scatters from the battery case in the manufacture of the battery, the scattered electrolyte solution may enter the sealing member through the hole 21a provided in the terminal cap 21. The electrolyte solution may adhere to the surface of the second resin layer 23b of the valve body 23, for example. In this case, since the second resin layer 23b has corrosion resistance to the electrolyte solution, corrosion of the valve body 23 is suppressed.

However, the electrolyte solution can also adhere to end surface S1 (first end surface) that is an outer edge of the valve body 23 through a gap between folded portion 22a of the bottom plate 22 and the spacer 24. Normally, since metal layer 23c is exposed on the end surface S1, corrosion may proceed due to contact of the electrolyte solution with the metal layer 23c. As a result, the valve body 23 may be peeled off from the bottom plate 22, and the valve operating pressure may decrease. In Fig. 2, an entry path of the electrolyte solution through the gap between the folded portion 22a and the spacer 24 to the end surface S1 is indicated by a broken arrow.

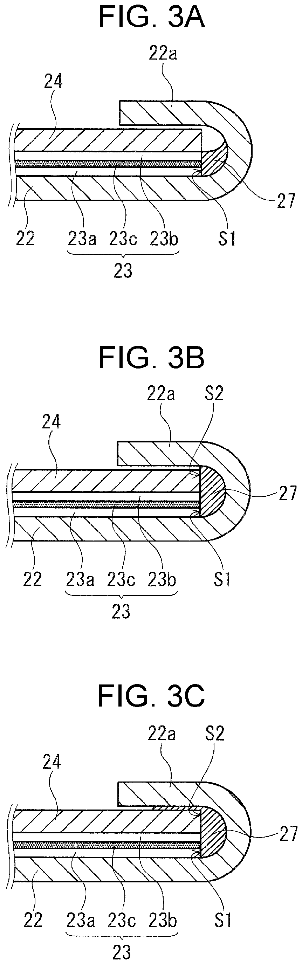

Figs. 3A to 3C are views showing examples of structures of the valve body 23, the spacer 24 and the bottom plate 22 in the sealed battery of the present exemplary embodiment, and particularly show an outer peripheral edge portion of the bottom plate 22 in an enlarged manner.

In the example of Fig. 3A, the end surface S1 that is an outer edge of the valve body 23 is covered with protective layer 27 having corrosion resistance to the electrolyte solution. In this case, an electrolyte solution entering from the gap between the folded portion 22a of the bottom plate 22 and the spacer 24 can adhere to the protective layer 27, but is prevented from coming into contact with a metal portion of the valve body 23. Therefore, corrosion of the valve body through the end surface S1 is suppressed, and peeling of the valve body 23 from the bottom plate 22 is suppressed. As a result, a decrease in the valve operating pressure is also suppressed, and the valve operating pressure can be maintained at a desired value.

In the example of Fig. 3B, the protective layer 27 covers the end surface S1 of the valve body 23 and covers end surface S2 (second end surface) that is an outer edge of the spacer. The protective layer 27 is also interposed in a space between the end surface S2 and the bottom plate 22. The protective layer 27 can fill the space between the end surface S2 and the bottom plate 22. As a result, the gap between the bottom plate 22 and the spacer 24 is closed by the protective layer 27. Therefore, an effect of suppressing corrosion of the valve body through the end surface S1 is enhanced, and peeling of the valve body 23 from the bottom plate 22 is effectively suppressed. As a result, a decrease in the valve operating pressure can be effectively suppressed.

In the example of Fig. 3C, the protective layer 27 covers the end surface S1 of the valve body 23 and the end surface S2 of the spacer 24, and is also interposed in the space between the end surface S2 and the bottom plate 22. The protective layer 27 is also attached to an upper surface of the spacer 24 (a surface not facing the valve body 23) and comes into contact with the folded portion of the bottom plate 22 above the upper surface. As a result, the gap between the bottom plate 22 and the spacer 24 can be reliably closed by the protective layer 27. Therefore, the corrosion of the valve body through the end surface S1 can be reliably suppressed, and peeling of the valve body 23 from the bottom plate 22 is effectively suppressed. As a result, a decrease in the valve operating pressure can be effectively suppressed.

The extending distance of the upper surface of the spacer 24 from the end surface S2 of the protective layer 27 may be 0.02 mm or more, and is more preferably 0.1 mm or more from the viewpoint of reliably closing the gap between the bottom plate and the spacer 24.

The protective layer 27 contains a compound A having corrosion resistance to the electrolyte solution. Since the compound A is stable to the electrolyte solution and has flexibility, it preferably contains polyolefin such as polypropylene or polyethylene. The compound A may further contain a rubberbased material such as butadiene rubber. Among them, the compound A most preferably contains polyethylene.

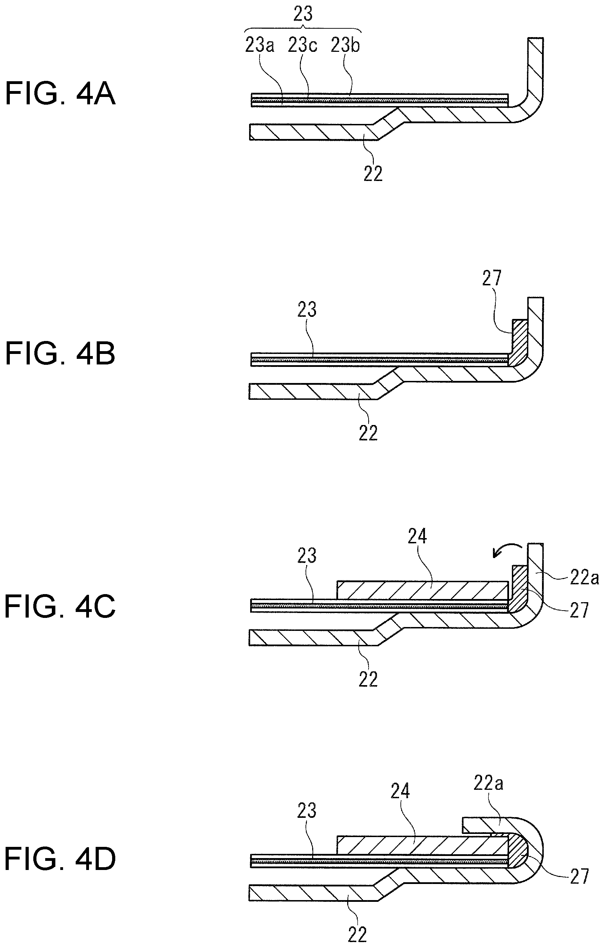

The structures shown in Figs. 3A to 3C can be realized by, for example, the following manufacturing method. Figs. 4A to 4D are process cross-sectional views showing a method of manufacturing a member in which the valve body 23 and the spacer 24 are integrated with the bottom plate 22 (lower sealing member).

First, as shown in Fig. 4A, the valve body 23 is disposed on the bottom plate 22, and the valve body 23 is fixed on the bottom plate 22 by thermal welding. In this state, the outer peripheral portion of the bottom plate 22 is bent and extends substantially perpendicularly to the other portion of the bottom plate 22.

Next, as shown in Fig. 4B, the protective layer 27 is formed on an outer periphery of the valve body 23, and as shown in Fig. 4C, the spacer 24 is disposed on the valve body 23. The protective layer may be formed by coating.

Thereafter, as shown in Fig. 4D, the folded portion 22a of the bottom plate 22 is further bent in the inner peripheral direction, and the valve body 23 is caulked to the bottom plate 22 via the spacer 24 (and protective layer 27). The structures shown in Figs. 3A to 3C are obtained depending on the width of the protective layer 27.

Next, another configuration of the battery 100 will be exemplarily described with a lithium primary battery as an example.

### (Positive electrode)

The positive electrode contains a positive electrode active material, and manganese dioxide can be used as the positive electrode active material. The positive electrode includes, for example, a positive electrode current collector and a positive electrode mixture layer attached to the positive electrode current collector. The positive electrode mixture layer may contain a resin material such as a fluororesin as a binder in addition to the positive electrode active material. The positive electrode mixture layer may contain a conductive material such as a carbon material as a conductive agent. The positive electrode current collector is, for example, an expanded metal, a net, or a punching metal made of stainless steel.

### (Negative electrode)

The negative electrode contains a negative electrode active material, and metal lithium or a lithium alloy can be used as the negative electrode active material. The metal lithium or the lithium alloy is, for example, extruded into a long sheet shape and used as the negative electrode. Examples of the lithium alloy includes an alloy such as Li-Al, Li-Sn, Li-Ni-Si, or Li-Pb, and a Li-Al alloy is preferable. The content of metal elements other than lithium contained in the lithium alloy is preferably from 0.1 mass% to 5 mass% inclusive from the viewpoint of ensuring the discharge capacity and stabilizing the internal resistance.

### (Separator)

As a separator, a microporous film or nonwoven fabric made of resin is preferably used. A material (resin) of the separator is preferably polyolefin, polyamide, polyamideimide, or the like.

### (Electrolyte solution)

As the electrolyte solution, a non-aqueous solvent in which a lithium salt is dissolved can be used. The non-aqueous solvent is not particularly limited, and propylene carbonate, ethylene carbonate, 1,2-dimethoxyethane, γ-butyrolactone, or the like can be used. Examples of the lithium salt include lithium tetrafluoroborate, lithium hexafluorophosphate, lithium trifluoromethanesulfonate, lithium bis(fluorosulfonyl)imide, and lithium bis(trifluoromethylsulfonyl)imide.

### [Examples]

Hereinafter, the present disclosure will be specifically described based on Examples and Comparative Examples. The present disclosure is not limited to the following Examples.

### <<Batteries A1 to A4, B1>>

### (1) Production of positive electrode

A positive electrode mixture in a wet state was prepared by mixing 100 parts by mass of electrolytic manganese dioxide and 5 parts by mass of Ketjen black as a conductive agent, and kneading the mixture further with the addition of 5 parts by mass of polytetrafluoroethylene as a binder and an appropriate amount of pure water.

The positive electrode mixture was pressure-bonded to an expanded metal (positive electrode current collector) made of SUS with a roll and dried to obtain a positive electrode. The thickness of the positive electrode after rolling was set to 520 pm, and the weight of the positive electrode mixture per unit area was set to 0.134 g/cm²

Thereafter, the positive electrode was cut into a band shape of 38 mm in width and 192 mm in length, subsequently, a part of the filling positive electrode mixture was peeled off, and a tab lead made of SUS was subjected to resistance welding to the part where the positive current collector was exposed.

### (2) Production of negative electrode

A sheet-like Li-Al alloy (Al content: 0.3 mass%) of 200 pm in thickness was cut into a predetermined size to obtain a band-shaped negative electrode. A tab lead made of nickel was connected by pressure welding to a predetermined site of the negative electrode.

### (3) Fabrication of electrode body

The positive electrode and the negative electrode were stacked with a separator interposed therebetween, and spirally wound along a winding core with a diameter of 3.5 mm to fabricate an electrode body. As the separator, a microporous film made of polyethylene of 25pm in thickness was used.

### (4) Preparation of electrolyte solution

Lithium trifluoromethanesulfonate as a lithium salt was dissolved at a concentration of 0.7 mol/L in a non-aqueous solvent obtained by mixing propylene carbonate (PC) and 1,2-dimethoxyethane (DME) at a volume ratio of 4 : 6 to prepare an electrolyte solution. The viscosity of the electrolyte solution was 0.0014 Pa ·s at 20°C.

### (5) Assembly of cylindrical battery

A ring-shaped bottom plate (made of SUS, 0.3 mm in thickness) with an inner diameter of 4.0 mm was prepared. A valve element, a protective layer made of polypropylene (PP), and a spacer (made of SUS, 0.3 mm in thickness) were disposed on the bottom plate as shown in Figs. 4A to 4C, and an outer peripheral edge portion of the bottom plate was bent in an inner peripheral direction as shown in Fig. 4D, so that the valve element was caulked with the spacer interposed therebetween to prepare a lower sealing member A having a structure shown in Fig. 3A. The valve body was an aluminum foil of 25pm in thickness, and both surfaces thereof were covered with a polyethylene (PE) film of 50 pm in thickness.

Prepared was a battery case with a bottomed cylindrical shape made of a nickel-plated steel sheet in a predetermined size. The electrode body was inserted into the battery case with a ring-shaped lower insulating plate disposed at the bottom of the electrode group. Thereafter, the tab lead of the negative electrode was connected to an inner bottom surface of the battery case.

A certain amount of the electrolyte solution was injected into the battery case to impregnate the electrolyte solution into the electrode body. An upper insulating plate was disposed on the electrode group. Thereafter, in a state where the tab lead of the positive electrode was connected to an inner surface of the bottom plate, the lower sealing member, a PTC element (0.3 mm in thickness, 5.0 mm in inner diameter), and a terminal cap (made of SUS, 0.3 mm in thickness) were stacked, and these members were sealed by caulking by the battery case with a gasket interposed therebetween, thereby completing a lithium primary battery (17 mm in diameter, 45.5 mm in height) for testing.

Inner diameter d of a hollow portion of the electrode body was approximately equal to the diameter of the winding core used for preparing the electrode body, and was 3.5mm. Inner diameter D of the battery case was 16.0 mm, and the distance L between the bottom plate and the electrode body was 2.5mm. The total area of the holes provided in the terminal cap was 1.8 mm^{2.} The lower sealing member is designed so that the valve operating pressure (safety valve strength) is 2.0MPa.

In this manner, ten sealed cylindrical lithium primary batteries A1 having the structure shown in Fig. 1 were fabricated.

Also, in the preparation of the lower sealing member, a lower sealing member B having a structure shown in Fig. 3B and a lower sealing member C having a structure shown in Fig. 3C were each prepared by preparing lower sealing members with different widths of the protective layer. In addition, a lower sealing member D was prepared in which the material of the protective layer in the lower sealing member C was changed to polyethylene.

Then, ten lithium primary batteries A2 for testing were fabricated in the same manner as in the lithium primary battery A1 except for using the lower sealing member B.

In addition, ten lithium primary batteries A3 for testing were fabricated in the same manner as in the lithium primary battery A1 except for using the lower sealing member C.

Further, ten lithium primary batteries A4 for testing were fabricated in the same manner as in the lithium primary battery A1 except for using the lower sealing member D.

Furthermore, ten lithium primary batteries B1 for testing were fabricated in the same manner as in the lithium primary battery A1 except for preparing the lower sealing member E provided with no protective layer and using the lower sealing member E.

### [Evaluation]

For ten of the twenty lithium batteries, the batteries immediately after fabrication were placed in an environment at 45°C and a relative humidity of 90% for 1 month. Thereafter, the lower sealing member was taken out from the battery, gas was blown from the bottom plate side toward the valve body in a state where the outer peripheral edge portion of the bottom plate was sealed, and the pressure when the valve body was broken or peeled off from the bottom plate was measured. The average value of the measured values in ten batteries was obtained and taken as the safety valve strength. Evaluation results of the safety valve strength of the batteries A1 to A4 and B1 are shown in Table 1.

### <<Batteries A5, B2, B3>>

In the lithium primary battery A1, the distance L between the bottom plate and the electrode body was changed to 2.0mm. The distance L was changed by adjusting a height of a groove (reduced diameter portion) of the battery case formed for caulking the sealing member with a gasket interposed therebetween.

Except for the foregoing, ten lithium primary batteries A5 for testing were fabricated in the same manner as in the lithium primary battery A1, and the safety valve strength was evaluated in the same manner.

In addition, in the lithium primary battery B1, the distance L between the bottom plate and the electrode body was changed to 2.3 mm and 2.0 mm, respectively, to obtain lithium primary batteries B2 and B3.

Ten lithium primary batteries B2 and ten lithium primary batteries B3 for testing were fabricated, and the safety valve strength was evaluated in the same manner.

Evaluation results of the safety valve strength of the batteries A5, B2 and B3 are shown in Table 2. In Table 2, the value of the distance L between the bottom plate and the electrode body in each battery is also shown.

**Table 1**

| Battery | Protective layer | | Safety valve strength /[MPa] |
|---|---|---|---|
| | Structure | Material | |
| A1 | Fig. 3A | PP | 1.6 |
| A2 | Fig. 3B | PP | 1.8 |
| A3 | Fig. 3C | PP | 1.9 |
| A4 | Fig. 3C | PE | 2.0 |
| B1 | - | - | 1.2 |

**Table 2**

| Battery | Distance L between bottom plate and electrode body/[mm] | Safety valve strength /[MPa] |
|---|---|---|
| A1 | 2.5 | 1.6 |
| A5 | 2.0 | 1.6 |
| B1 | 2.5 | 1.2 |
| B2 | 2.3 | 1.0 |
| B3 | 2.0 | 0.8 |

### <<Batteries A6, B4, B5>>

In the lithium primary battery A1, inner diameter d of a hollow portion of the electrode body was set to 2.5mm.

While the inner diameter d was reduced, the thickness of the positive electrode after rolling was increased to 530 pm and the thickness of the negative electrode was changed to 210 pm so that an outer diameter of the electrode body was substantially the same as that of the battery A1.

Except for the foregoing, ten lithium primary batteries A6 for testing were fabricated in the same manner as in the lithium primary battery A1, and the safety valve strength was evaluated in the same manner.

In addition, in the lithium primary battery B1, inner diameter d of a hollow portion of the electrode body was changed to 3.1 mm to obtain a lithium primary battery B4.

Further, in the lithium primary battery B1, the inner diameter d of a hollow portion of the electrode body was changed to 2.5 mm to obtain a lithium primary battery B5.

While the inner diameter d was reduced, in the lithium primary battery B4, the thickness of the positive electrode after rolling was increased to 525 pm and the thickness of the negative electrode was changed to 205 pm so that an outer diameter of the electrode body was substantially the same as that of the battery B1. In the lithium primary battery B5, the thickness of the positive electrode after rolling was increased to 530 pm and the thickness of the negative electrode was changed to 210pm.

Ten lithium primary batteries B4 and B4 for testing were fabricated, and the safety valve strength was evaluated in the same manner.

Evaluation results of the safety valve strength of the batteries A6, B4 and B5 are shown in Table 3. In Table 3, the inner diameter d of the hollow portion of the electrode body in each battery, the inner diameter D of the battery case, and the value of ratio d/D are also shown.

**Table 3**

| Battery | Battery case inner diameter | Hollow portion of electrode body inner diameter | d/D | Safety valve strength /[MPa] |
|---|---|---|---|---|
| | D/[mm] | d/[mm] | | |
| A1 | 16.0 | 3.5 | 0.219 | 1.6 |
| A6 | 16.0 | 2.5 | 0.156 | 1.6 |
| B1 | 16.0 | 3.5 | 0.219 | 1.2 |
| B4 | 16.0 | 3.1 | 0.194 | 0.8 |
| B5 | 16.0 | 2.5 | 0.156 | 0.7 |

### <<Batteries A7, B6, B7>>

In the lithium primary battery A1, the total area of the holes of the terminal cap was set to 3.0 mm^{2.}

Except for the foregoing, ten lithium primary batteries A7 for testing were fabricated in the same manner as in the lithium primary battery A1, and the safety valve strength was evaluated in the same manner.

In addition, in the lithium primary battery B1, the total area of the holes of the terminal cap was changed to 2.5 mm² and 3.0 mm², respectively, to obtain lithium primary batteries B6 and B7.

Ten lithium primary batteries B6 and B7 for testing were fabricated, and the safety valve strength was evaluated in the same manner.

Evaluation results of the safety valve strength of the batteries A7, B6 and B7 are shown in Table 4. In Table 4, the total value of the areas of the holes of the terminal cap in each battery is also shown.

### <<Batteries A8, B8, B9>>

In the lithium primary battery A1, the thickness of the separator in the electrode body was set to 0.015mm.

Except for the foregoing, ten lithium primary batteries A8 for testing were fabricated in the same manner as in the lithium primary battery A1, and the safety valve strength was evaluated in the same manner.

In addition, in the lithium primary battery B1, the thickness of the separator in the electrode body was changed to 0.02 mm and 0.015 mm, respectively, to obtain lithium primary batteries B8 and B9.

Ten lithium primary batteries B8 and B9 for testing were fabricated, and the safety valve strength was evaluated in the same manner.

Evaluation results of the safety valve strength of the batteries A8, B8 and B9 are shown in Table 5. In Table 5, the thickness of the separator in each battery is also shown.

**Table 4**

| Battery | Total area of holes of terminal cap/[mm²] | Safety valve strength /[MPa] |
|---|---|---|
| A1 | 1.8 | 1.6 |
| A7 | 3.0 | 1.6 |
| B1 | 1.8 | 1.2 |
| B6 | 2.5 | 0.7 |
| B7 | 3.0 | 0.5 |

**Table 5**

| Battery | Separator thickness /[mm] | Safety valve strength /[MPa] |
|---|---|---|
| A1 | 0.025 | 1.6 |
| A8 | 0.015 | 1.6 |
| B1 | 0.025 | 1.2 |
| B8 | 0.020 | 0.7 |
| B9 | 0.015 | 0.6 |

### <<Batteries A9, B10, B11>>

In the lithium primary battery A1, the mixing ratio of PC and DME in the electrolyte solution was changed to PC : DME = 2 : 8 in volume ratio. As a result, an electrolyte solution with a viscosity at 20°C of 0.001 Pa ·s was prepared and used for a lithium primary battery.

Except for the foregoing, ten lithium primary batteries A9 for testing were fabricated in the same manner as in the lithium primary battery A1, and the safety valve strength was evaluated in the same manner.

In addition, in the lithium primary battery B1, the mixing ratio of PC and DME in the electrolyte solution was changed to PC : DME = 3 : 7 in volume ratio. As a result, an electrolyte solution with a viscosity at 20°C of 0.0012 Pa ·s was prepared, and a lithium primary battery B10 was obtained using the prepared electrolyte solution.

In addition, in the lithium primary battery B1, the mixing ratio of PC and DME in the electrolyte solution was changed to PC : DME = 2 : 8 in volume ratio. As a result, an electrolyte solution with a viscosity at 20°C of 0.001 Pa ·s was prepared, and a lithium primary battery B11 was obtained using the prepared electrolyte solution.

Ten lithium primary batteries B10 and B 11 for testing were fabricated, and the safety valve strength was evaluated in the same manner.

Evaluation results of the safety valve strength of the batteries A9, B10 and B 11 are shown in Table 6. In Table 6, the viscosity of the electrolyte solution in each battery is also shown.

**Table 6**

| Battery | Viscosity of electrolyte solution/[Pa ·s] | Safety valve strength /[MPa] |
|---|---|---|
| A1 | 0.0014 | 1.6 |
| A9 | 0.001 | 1.6 |
| B1 | 0.0014 | 1.2 |
| B10 | 0.0012 | 0.8 |
| B11 | 0.001 | 0.5 |

### <<Batteries A10, B12, B13>>

In the lithium primary battery A1, the weight of the positive electrode mixture in the positive electrode was changed, and the weight of the positive electrode mixture per unit area was set to 0.162 g/cm²

Except for the foregoing, ten lithium primary batteries A10 for testing were fabricated in the same manner as in the lithium primary battery A1, and the safety valve strength was evaluated in the same manner.

In addition, in the lithium primary battery B 1, the weight of the positive electrode mixture in the positive electrode was changed, and the weight of the positive electrode mixture per unit area was changed to 0.148 g/cm² and 0.162 g/cm², respectively, to obtain lithium primary batteries B12 and B13.

Ten lithium primary batteries B12 and B13 for testing were fabricated, and the safety valve strength was evaluated in the same manner.

Evaluation results of the safety valve strength of the batteries A10, B12 and B13 are shown in Table 7. In Table 7, the weight of the positive electrode mixture per unit area in each battery is also shown.

**Table 7**

| Battery | Weight of positive electrode mixture per unit area/[g/cm²] | Safety valve strength /[MPa] |
|---|---|---|
| A1 | 0.134 | 1.6 |
| A10 | 0.162 | 1.6 |
| B1 | 0.134 | 1.2 |
| B12 | 0.148 | 1.0 |
| B13 | 0.162 | 0.6 |

As shown in Table 1, in the batteries A1 to A4 in which the protective layer containing the compound A was formed so as to cover at least the end surface of the valve body, the safety valve strength could be maintained high. On the other hand, in the battery B1 not provided with a protective layer, the safety valve strength was low.

In the battery A2 formed so that the protective layer covers the end surface of the valve body and also covers the end surface of the spacer and fills the space between the end surface of the spacer and the bottom plate, the safety valve strength could be maintained high as compared with the battery A1 formed so that the protective layer covers only the end surface of the valve body. Further, the battery A3 formed so that the protective layer filled the gap between the upper surface of the spacer and the folded portion of the bottom plate could maintain a higher safety valve strength than the battery A2.

Further, the battery A4 formed so that the protective layer fills the gap between the upper surface of the spacer and the folded portion of the bottom plate, using polyethylene as the protective layer, could maintain the safety valve strength substantially similar to that immediately after manufacturing.

As shown in Table 2, in the batteries B2 and B3 not provided with a protective layer, the safety valve strength was lower than that of the battery B 1 by setting the distance L between the bottom plate and the electrode body to 2.3 mm or less. On the other hand, in the battery A5 provided with the protective layer, the same high safety valve strength as that of the battery A1 could be maintained even when the distance L between the bottom plate and the electrode body was set to 2.3 mm or less.

As shown in Table 3, in the batteries B4 and B5 not provided with a protective layer, by setting the ratio d/D of the inner diameter d of the hollow portion of the electrode body to the inner diameter D of the battery case to 0.2 or less, the safety valve strength was lower than that of the battery B1. On the other hand, in the battery A6 provided with the protective layer, the same high safety valve strength as that of the battery A1 could be maintained even when d/D was set to 0.2 or less.

As shown in Table 4, in the batteries B6 and B7 not provided with a protective layer, the safety valve strength was lower than that of the battery B 1 by setting the total area of the holes of the terminal cap to 2 mm² or more. On the other hand, in the battery A7 provided with the protective layer, the same high safety valve strength as that of the battery A1 could be maintained even when the total hole area was set to 2 mm² or more.

As shown in Table 5, in the batteries B8 and B9 not provided with a protective layer, the safety valve strength was lower than that of the battery B1 by setting the thickness of the separator to 0.02 mm or less. On the other hand, in the battery A8 provided with the protective layer, the same high safety valve strength as that of the battery A1 could be maintained even when the thickness of the separator was 0.02 mm or less.

As shown in Table 6, in the batteries B10 and B11 not provided with a protective layer, the safety valve strength was lower than that of the battery B 1 by setting the viscosity of the electrolyte solution to 0.0012 Pa ·s or less. On the other hand, in the battery A9 provided with the protective layer, the same high safety valve strength as that of the battery A1 could be maintained even when the viscosity of the electrolyte solution was 0.0012 Pa ·s or less.

As shown in Table 7, in the batteries B12 and B13 not provided with a protective layer, the safety valve strength was lower than that of the battery B 1 by setting the positive electrode mixture weight per unit area to 0.14 g/cm² or more. On the other hand, in the battery A9 provided with the protective layer, the same high safety valve strength as that of the battery A1 could be maintained even when the positive electrode mixture weight per unit area was set to 0.14 g/cm² or more.

### INDUSTRIAL APPLICABILITY

The sealed battery according to the present invention has a stable safety valve, and thus is suitable as a power source for various electronic devices.

### REFERENCE MARKS IN THE DRAWINGS

- 1: positive electrode
- 1a: positive electrode current collector
- 2: negative electrode
- 3: separator
- 4: positive-electrode lead
- 5: negative-electrode lead
- 6: upper insulating plate
- 7: lower insulating plate
- 9: battery case
- 10: electrode body
- 21: terminal cap
- 21a: hole
- 22: bottom plate
- 22a: folded portion
- 23: valve body
- 23a: first resin layer
- 23b: second resin layer
- 23c: metal layer
- 24: spacer
- 25: PTC element
- 26: gasket
- 27: protective layer
- 100: battery

## Claims

1. A sealed battery comprising:
a battery case with a bottomed cylindrical shape including an opening;
an electrode body housed in the battery case;
an electrolyte solution; and
a sealing member that closes the opening of the battery case, wherein
the sealing member includes:
a terminal cap,
a bottom plate electrically connecting the terminal cap and an electrode of one polarity of the electrode body, and
a valve body interposed between the terminal cap and the bottom plate by stacking, wherein
the valve body includes a surface covered with a resin material, and a first end surface that is an outer edge of the valve body is covered with a protective layer containing a compound A including corrosion resistance to the electrolyte solution.

2. The sealed battery according to Claim 1, wherein an outer peripheral edge portion of the bottom plate includes a folded portion bent in an inner peripheral direction to sandwich the valve body between the folded portion and another portion of the bottom plate, an outer peripheral edge portion of the valve body is caulked by the folded portion, and the valve body is fixed to the bottom plate.

3. The sealed battery according to Claim 2, further comprising
a spacer interposed between the valve body and the folded portion of the bottom plate, and
the protective layer is also interposed in a space between a second end surface that is an outer edge of the spacer and the bottom plate.

4. The sealed battery according to Claim 3, wherein the protective layer is attached to a surface of the spacer, the surface not facing the valve body, and contacts with the folded portion of the bottom plate and closes a gap between the folded portion and the spacer.

5. The sealed battery according to any one of Claims 1 to 4, wherein a distance L between the bottom plate and the electrode body is 2.3 mm or less.

6. The sealed battery according to any one of Claims 1 to 5, wherein
d/D ≤ 0.2 is satisfied
where d denotes an inner diameter of a hollow portion of the electrode body, and
D denotes an inner diameter of the battery case.

7. The sealed battery according to any one of Claims 1 to 6, wherein the terminal cap includes a hole, and a total area of the holes is 2 mm² or more.

8. The sealed battery according to any one of Claims 1 to 7, wherein a thickness of a separator constituting the electrode body is 0.02 mm or less.

9. The sealed battery according to any one of Claims 1 to 8, wherein the electrolyte solution includes a viscosity at 20°C of 0.0012 Pa ·s or less.

10. The sealed battery according to any one of Claims 1 to 9, wherein a weight of a positive electrode mixture per unit area of a positive electrode constituting the electrode body is 0.14 g/cm² or more.

11. The sealed battery according to any one of Claims 1 to 10, wherein the compound A contains polyethylene.
